# EUROPÄISCHE PATENTANMELDUNG

(11) **EP 2 549 413 A1**
(43) Veröffentlichungstag der Anmeldung: **23.01.2013**
(21) Anmeldenummer: 11174501.4
(22) Anmeldetag: 19.07.2011
(51) Int. Cl.: G06Q 10/00

(54) **Verfahren zur automatischen Generierung einer Anweisungsliste**

(71) Anmelder: Siemens Aktiengesellschaft, 80333 München (DE)
(72) Erfinder: Feuerbach, Armin, 91085 Weisendorf (DE); Harbich, Stefanie, 90455 Nürnberg (DE); Höfler, Werner, 90542 Eckental (DE); Kerpen, Heinz, 91074 Herzogenaurach (DE)

(57) **Zusammenfassung**

Die Erfindung betrifft ein Verfahren zur automatischen Generierung einer Anweisungsliste (60) für Handlungen an einem Automatisierungssystem (10) in einem Automatisierungsprojekt durch einen Server (32), wobei in einer vom Server (32) umfassten oder für den Server (32) erreichbaren Datenbank (26) für ein oder mehrere Automatisierungsprojekte jeweils eine Datenbasis (28) mit jeweils mindestens einem Datensatz (30) hinterlegt wird oder ist, wobei sich ein Benutzer zum Generieren der Anweisungsliste (60) mittels des Servers (32) bei der Datenbank (26) anmeldet und ein Automatisierungsprojekt und damit mittelbar oder unmittelbar die zugehörige Datenbasis (28) auswählt, wobei der Server (32) in Bezug auf die Datenbasis (28) automatisch eine Anweisungsliste (60) anhand mindestens eines Datensatzes (30) der Datenbasis (28) für den Benutzer generiert.

## Beschreibung

Die Erfindung betrifft ein Verfahren zur automatischen Generierung einer Anweisungsliste für Handlungen an einem Automatisierungssystem in einem Automatisierungsprojekt.

Während einer Inbetriebnahme oder einer Wartung einer Automatisierungslösung oder bei sonstigen Service-Einsätzen muss der jeweilige Benutzer, also zum Beispiel ein Programmierer, bekanntlich eine Vielzahl von Aspekten bedenken, für welche die jeweiligen Informationen aus unterschiedlichen Quellen stammen und durch den Zeitablauf und den Arbeitsablauf sowie den Status der Inbetriebnahme/Wartung beeinflusst werden. Dazu gehören zum Beispiel solche Aspekte wie Vorbereitung der Arbeitsmittel, Fehlerbeschreibung des Kunden, Fehlerbild in der jeweiligen Anlage, Beschaffung einer Übersicht über einen aktuellen Software- und/oder Firmware-Stand des Automatisierungssystems, also der für die jeweilige Automatisierungslösung benötigten oder verwendeten Hardware, eine Übersicht über die für das Automatisierungssystem benötigte Soft-und/oder Firmware, usw.

Um diese und weitere Punkte systematisch abarbeiten zu können, führen viele Benutzer persönliche Listen. Dies ist allerdings mit einer Vielzahl von Nachteilen verbunden. Im Einzelnen: Jeder Benutzer erstellt seine eigene Liste oder eine Mehrzahl eigener Listen was einerseits zu Doppel- oder Mehrfachaufwand führt und andererseits die Wiederverwendung von dabei gewonnenen Erkenntnissen verhindert oder zumindest erschwert. Jede derartige Liste ist vom jeweiligen Automatisierungssystem entkoppelt und deshalb kann keine Systemprüfung stattfinden. Der Benutzer ist für eine solche Prüfung selbst verantwortlich und muss damit entsprechend über umfangreiche Spezialkenntnisse verfügen. Außerdem ist eine solche "manuelle" Prüfung sehr fehleranfällig, da die Qualität der Prüfung im Wesentlichen von der Systematik und der Gründlichkeit des Benutzers abhängt. Selbstverständlich kann jede derartige, selbst erstellte Liste nur Einträge umfassen, die der Benutzer kennt oder an die der Benutzer denkt. Sogenanntes Systemwissen kann nicht automatisch ergänzend oder zu Prüfungszwecken hinzugenommen werden. Des Weiteren kann nicht automatisch geprüft werden, ob die jeweilige Liste des Benutzers zum jeweiligen Automatisierungssystem oder zur jeweiligen Automatisierungslösung oder zu dessen bzw. deren Konfiguration passt und zwar weder hinsichtlich der Konsistenz der Einträge der Liste noch im Hinblick auf deren Sinnhaftigkeit. Bei der Verwendung der vom Benutzer selbst erstellten Liste muss ein Status der Arbeiten auch jeweils manuell in die Liste übertragen werden, mit den Nachteilen einer möglichen Inkonsistenz und/oder fehlerhaften Übertragung. Des Weiteren muss der Benutzer im Verlauf der Arbeiten zu jedem Eintrag in der Liste die zugehörige "Stelle" im Automatisierungssystem, in der Projektierung, in der Software, usw. kennen und selbst finden um die jeweiligen Einträge zu bearbeiten oder zu erledigen. Dies erfordert in erheblichem Umfang Detailwissen und ist selbst für Spezialisten zeitaufwändig. Schließlich umfasst eine solche, vom jeweiligen Benutzer selbst erstellte Liste maximal Vorschläge für eine evtl. Problemlösung, nämlich solche Vorschläge, die der jeweilige Benutzer selbst kennt, weil er sie bereits angewandt oder in sonstiger Weise gesammelt hat. Lösungen von Kollegen oder vom Hersteller, zum Beispiel vom Hersteller eines Automatisierungsgerätes, sind oftmals nicht im Zugriff und wenn dann nur mit erheblichem Aufwand und selbst dann ist oftmals noch eine mühsame Interpretation der von Fremden bereit gestellten Informationen erforderlich. Außerdem sind solche (eigenen oder fremden) Vorschläge und Lösungen oftmals nicht passend für einen momentanen Anwendungsfall, da eine solche manuell erstellte Liste im Vorfeld des jeweiligen Einsatzes erstellt und später selten ergänzt oder angepasst wird.

Eine automatische Erstellung solcher bisher individuell und manuell geführter Listen ist bisher nicht bekannt geworden. Lediglich aus anderen artfremden Gebieten sind einzelne Ansätze bekannt, die ausgehend von der Erfindung als vermeint-liche Parallelen erkannt wurden. So ist von einer namhaften Internet-Plattform, die den Erwerb von Büchern oder sonstigen Medien ermöglich, bekannt, dass ein Benutzer der Plattform, wenn er zum Beispiel Daten zu einem Buch angegeben hat, nicht nur über das den jeweiligen Daten entsprechende Buch sondern auch über andere Bücher des selben Autors oder über Bücher informiert wird, die andere Nutzer derselben Plattform zusammen mit dem vom Benutzer zunächst spezifizierten Buch erworben haben. Des Weiteren ist durch die Technik der sogenannten Hyperlinks eine Möglichkeit bekannt, einen Benutzer über eine Vielzahl von damit bewirkten Verknüpfungen ausgehend von einer Startinformation zu weiteren Informationen zu führen.

Eine Aufgabe besteht entsprechend darin, ein Verfahren zur automatischen Generierung einer solchen Anweisungsliste anzugeben.

Diese Aufgabe wird erfindungsgemäß mit den Merkmalen des Anspruchs 1 gelöst. Dazu ist bei einem Verfahren zur automatischen Generierung einer Anweisungsliste für Handlungen an einem Automatisierungssystem in einem Automatisierungsprojekt vorgesehen, dass die automatische Generierung mittels eines Servers erfolgt, dass in einer vom Server umfassten oder für den Server erreichbaren Datenbank für ein oder mehrere Automatisierungsprojekte jeweils eine Datenbasis mit jeweils mindestens einem Datensatz hinterlegt wird oder ist, dass sich ein Benutzer zum Generieren der Anweisungsliste mittels des Servers bei der Datenbank anmeldet und ein Automatisierungsprojekt und damit mittelbar oder unmittelbar die zugehörige Datenbasis auswählt und dass der Server für den Benutzer in Bezug auf die Datenbasis automatisch eine Anweisungsliste anhand mindestens eines Datensatzes der Datenbasis generiert.

Der Vorteil der Erfindung besteht darin, dass für alle Automatisierungsprojekte, für die nach dem Ansatz gemäß der Erfindung automatisch Anweisungslisten generierbar sind, eine Datenbasis besteht, die das Automatisierungsprojekt beschreibt. Die Beschreibung kann für verschiedene Automatisierungsprojekte mit einer jeweils unterschiedlichen Detailtiefe vorliegen. Je mehr Details die Datenbasis umfasst, desto spezifischer kann die automatisch generierte Anweisungsliste werden.

Bei einer besonderen Ausführungsform der Datenbank kann vorgesehen sein, dass die Datenbasis für ein Automatisierungsprojekt jeweils zumindest einen Datensatz umfasst, der Einzelheiten des Automatisierungssystems des Automatisierungsprojekts beschreibt. Eine solche Beschreibung umfasst danach zum Beispiel Details zur jeweils verwendeten Zentraleinheit und/oder weiteren Automatisierungsgeräten.

Indem sich der Benutzer bei der Datenbank anmeldet und dasjenige Automatisierungsprojekt auswählt, das für ihn für aktuelle oder zukünftige Aufgaben relevant ist, ergibt sich über den Server direkt oder indirekt eine Zugriffsmöglichkeit auf die dem Automatisierungsprojekt zugehörige Datenbasis. Damit kann der Server für den Benutzer in Bezug auf die Datenbasis automatisch eine Anweisungsliste anhand mindestens eines Datensatzes der Datenbasis generieren. Bei dem oben skizzierten Beispiel kann die Anweisungsliste sich damit auf Besonderheiten in Bezug auf die jeweilige Zentraleinheit beziehen. Die automatisch generierte Anweisungsliste kann auf diese Weise einen Eintrag erhalten, der zum Beispiel lautet: "Handbuch für Zentraleinheit xy beschaffen" und/oder "Handbuch für Zentraleinheit xy am Einsatzort verfügbar machen", wobei xy jeweils für die in dem Automatisierungssystem des jeweiligen Automatisierungsprojekts tatsächlich verwendete Zentraleinheit steht, für welche die Datenbasis oder der mindestens eine Datensatz zumindest eine kodierte Kennung umfasst, die bei dem hier beschriebenen Zugriff abgefragt und zur Übernahme in die Anweisungsliste aufgelöst wird. Daten in dem mindestens einen Datensatz oder der Datenbasis können auch automatisch verknüpft werden. Eine automatische Generierung eines Eintrags für eine Anweisungsliste, der sich auf textuelle Unterlagen oder Daten bezieht, kann zum Beispiel automatisch mit einer Abfrage hinsichtlich der Sprache, in der diese Unterlagen/Daten benötigt werden, verknüpft sein. Eine solche Abfrage kann ggf. auch automatisch, also ohne eine zusätzliche Benutzerauswahl, aufgelöst werden, zum Beispiel anhand der Sprache, die der Benutzer zum Zugriff auf den Server ausgewählt hat oder anhand einer Information in der Datenbasis/in dem Datensatz, der den Ort des Automatisierungssystems kodiert, wobei auf deren Basis automatisch die für den jeweiligen Ort relevante Sprache ermittelt wird.

Genauso wie auf Handbücher oder dergleichen kann sich die automatische Generierung der Anweisungsliste bereits anhand von Informationen in dem mindestens einen Datensatz über die vom Automatisierungssystem umfassten Geräte auf die für diese Geräte evtl. benötigten Softwareprogramme, Treiber, usw. beziehen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn der Benutzer in dem Verfahren die Möglichkeit erhält, in der zum jeweiligen Automatisierungsprojekt gehörigen Datenbasis einen oder mehrere Datensätze auszuwählen und wenn dann der Server automatisch für den Benutzer eine Anweisungsliste anhand mindestens eines so ausgewählten Datensatzes der Datenbasis generiert, kann der Benutzer auf die Generierung der Anweisungsliste und den zu erwartenden Umfang der Anweisungsliste Einfluss zu nehmen. Zum Beispiel kann der Benutzer in der dem jeweils interessierenden Automatisierungsprojekt zugehörigen Datenbasis einen ersten Datensatz mit Informationen zur Software des Automatisierungssystems und einen zweiten Datensatz mit Informationen zu den Geräten des Automatisierungssystems auswählen. Die so generierbare Anweisungsliste informiert den Benutzer einerseits zumindest über die von dem Automatisierungssystem umfasste Hardware. Für den Fall, dass sich dabei für den Benutzer die Situation ergibt, dass das Automatisierungssystem ein Gerät umfasst, das der Benutzer nicht kennt oder bisher noch nicht verwendet hat, kann sich dieser rechtzeitig, also nicht erst, wenn er für Inbetriebnahme- oder Servicetätigkeiten am Ort des Automatisierungssystems eintrifft, hinsichtlich des jeweiligen Geräts orientieren. Ähnliches gilt entsprechend für die für das Automatisierungssystem benötigte Software, für die der Server ebenfalls automatisch Einträge in der Anweisungsliste erzeugt, die den Benutzer zumindest über die für den Zugriff auf das Automatisierungssystem notwendige Software informieren.

Für eine spezielle Implementierung des Verfahrens ist vorgesehen, dass der Server eine begrenzte Anzahl von Anfragen verarbeiten kann, wobei für jede Anfrage mindestens ein Kriterium hinterlegt ist und wobei jedes Kriterium mit mindestens einem Datensatz verknüpft ist. Eine Beschränkung auf eine begrenzte Anzahl möglicher Abfragen ist sinnvoll, weil ansonsten eine Funktionalität nach Art eines Parser erforderlich wäre, welche die jeweilige Anfrage des Benutzers in durch den Server verarbeitbare Bestandteile zerlegt und die semantische Bedeutung wesentlicher Begriffe in ebenfalls elektronisch verarbeitbare Daten zerlegt. Dies ist aufwendig und fehleranfällig, denn es reicht zum Beispiel nicht aus, durch einen schlichten Vergleich einzelner Zeichenkette, bestimmte Schlagworte zu erkennen. Bei einer Anfrage wie "Welche Software wird benötigt?" könnte zwar die Identifikation der Zeichenkette "Software" als Schlüsselwort ausreichen um sodann den Zugriff auf den Datensatz mit Informationen zu der für das Automatisierungsprojekt benötigten Software vorzunehmen und sodann auf dessen Basis automatisch Einträge für die Anweisungsliste zu generieren. Dass dies nicht in jedem Fall zu sinnvollen Ergebnissen führen kann, kann man sich leicht vor Augen führen, wenn man eine weitere Anfrage wie zum Beispiel "Welche Software wird benötigt, wenn die nächstgrößere Zentraleinheit eingesetzt wird" betrachtet. Bei einer Konzentration auf die Identifikation von Schlüsselworten würden anhand des identifizierten Schlüsselworts "Software" nur - genau wie bei dem zuerst gebildeten Beispiel - Softwarebezogene Einträge in der Anweisungsliste generiert, die sich auf die momentane Konfiguration des Automatisierungssystems beziehen. Wenn der Benutzer in einer solchen Situation davon ausginge, seine Anfrage sei korrekt "verstanden" worden, kann sich sogar die Situation ergeben, dass der Benutzer mit der nächstgrößeren Zentraleinheit, die er bei seiner Anfrage im Sinn hatte, und der in der Anweisungsliste angegebenen Software zum Ort des Automatisierungssystems anreist um dort dann feststellen zu müssen, dass die mitgebrachte Software zwar zum Automatisierungssystem in der gegenwärtigen Konfiguration passt aber gerade nicht mit der vorgesehenen, neuen Zentraleinheit kompatibel ist.

Die damit also sinnvolle Beschränkung der möglichen Abfrage auf eine vorgegebene Anzahl von Abfragen ermöglich eine Implementierung zum Beispiel in Form einer Auswahlliste mit sogenannten Radiobuttons, bei denen durch Aktiveren, also gewissermaßen "Ankreuzen", einzelne Aspekte wie zum Beispiel "Software", "Hardware" usw. auswählbar sind. Jede auf diese Weise auswählbare Option kann mit mindestens einem Kriterium, zum Beispiel einer Kennziffer oder dergleichen, verbunden sein, für die ein Datensatz in einer Datenbasis der Datenbank oder ein Datum in einem solchen Datensatz eine entsprechende Kennung aufweist. Mit der Auswahl der jeweiligen Option ergibt sich also anhand der dieser zugeordneten Kennziffer(n) oder sonstiger Kriterien eine Möglichkeit zur automatischen Auswahl aller als im Zusammenhang mit dieser Option als relevant gekennzeichneten Information in der Datenbasis und damit eine Möglichkeit zur automatischen Generierung einer Anweisungsliste durch den Server, der diese Informationen in einer für den Benutzer verständlichen Form aufbereitet.

Indem die Datenbasis in der Datenbank Informationen über das jeweilige Automatisierungsprojekt/-system in nahezu unbegrenzter Detailtiefe aufnehmen kann, sind auch Anwendungsszenarien möglich, bei denen in der Anweisungsliste für eine oder mehrere Handlungen Einträge gespeichert werden, die im Zusammenhang mit dem Automatisierungssystem vorzunehmen sind, wobei in der Anweisungsliste automatisch einzelne Handlungen in detaillierte Handlungen aufgespalten und automatisch mit projektbezogenen Daten versehen werden. So kann eine Anfrage wie zum Beispiel "Neue Kommunikationsbaugruppe installieren und in Betrieb nehmen" aufgrund einer Verknüpfung mit den Aspekten Soft- und Hardware zur automatischen Generierung von Einträgen in der Anweisungsliste führen, die sich darauf beziehen, welche Typen oder welche Art von vom Kommunikationsbaugruppen mit den sonstigen Geräten des Automatisierungssystems kompatibel sind und welche Software benötigt wird. Die Anweisungsliste kann dann weiter verfeinert werden, indem automatisch Einträge generiert werden, die den Installationsvorgang beschreiben, zum Beispiel "Anlage in einen sicheren Zustand bringen", "Automatisierungssystem in STOP schalten", "bisherige Kommunikationsbaugruppe entfernen", "neue Kommunikationsbaugruppe installieren", "Automatisierungssystem starten". Aufgrund der Vielzahl der Informationen, die grundsätzlich in einem Datensatz für eine Datenbasis wie hier beschrieben hinterlegt werden können, kann die Anweisung "bisherige Kommunikationsbaugruppe entfernen" in nochmals detailliertere Handlungen aufgespalten werden und damit zum Beispiel zu automatisch generierten Einträgen in der Anweisungsliste führen wie: "dritte Baugruppe von rechts neben der Zentraleinheit identifizieren", "Verbindungskabel zwischen Zentraleinheit und der dritten Baugruppe entfernen", "dritte Baugruppe entnehmen". Für eine solche Aufspaltung sind in der Datenbasis Informationen über einen Anbringungsort des jeweiligen Gerätes und die Art der Verbindung des jeweiligen Gerätes mit anderen Geräten gespeichert. Diese Informationen sind automatisch durch den Server auswertbar und bei einer automatischen Auswertung können durch den Server Einträge in der Anweisungsliste in detailliertere Anweisungen aufgespalten werden, die den Benutzer mit zusätzlichen Informationen versorgen, die diesen in die Lage versetzen, ohne besondere Kenntnisse hinsichtlich sämtlicher Aspekte des Automatisierungssystems an diesem Maßnahmen vorzunehmen, die ansonsten nur für einen Experten oder beim Zusammenwirken mehrerer Fachleute möglich waren.

Wenn die Anweisungsliste in eine Entwicklungsumgebung zur Verwendung mit dem Automatisierungssystem integriert ist, ist einerseits eine verlässliche Plattform zur Darstellung und Abarbeitung der Anweisungsliste gegeben und andererseits kann die Anweisungsliste, nämlich ein oder mehrere dortige Einträge, auch mit Daten, auf welche die Entwicklungsumgebung Zugriff bietet, kombiniert werden. In dem oben skizzierten Beispiel kann die Information hinsichtlich des Anbringungsorts der Kommunikationsbaugruppe (z.B. "dritte Baugruppe") auch aus einem Projektierungsdatensatz kommen, auf den mittels der Entwicklungsumgebung ein Zugriff möglich ist. Des Weiteren kann eine Abfrage wie zum Beispiel "Motor tauschen" dann dazu führen, dass zunächst - unter dem Aspekt Hardware - der Typ des aktuell installierten Motors ermittelt wird, so dass ein Motor gleichen Typs oder zumindest passenden Typs zum Einsatzort gebracht werden kann. Hinsichtlich der Ermittlung eines Motors mit einem passenden Typ, etwa wenn der Typ des auszutauschenden Motors nicht mehr verfügbar ist, kann automatisch in einer Herstellerdatenbank anhand des Typs des auszutauschenden Motors und evtl. weiterer Informationen ein passender Typ gesucht werden. Unter der Voraussetzung, dass ein Motor gleichen Typs noch beschafft werden kann, können automatisch in der Anweisungsliste generierte Einträge zum Beispiel lauten: "Anlage in einen sicheren Zustand bringen", "Automatisierungssystem in STOP schalten", "bisherigen Motor deinstallieren", "neuen Motor installieren", "Drehrichtung am neuen Motor prüfen", "Automatisierungssystem starten". Dabei kann der automatisch generierte Eintrag "Drehrichtung am neuen Motor prüfen" zum Beispiel anhand eines Zugriffs auf Daten, die über die Entwicklungsumgebung zur Verfügung stehen, automatisch in Einträge in der Anweisungsliste wie folgt aufgespalten werden "Ausgang A4.5 aktivieren zur Überprüfung der Funktion Schleichgang vorwärts", "Ausgang A4.6 aktivieren zur Überprüfung der Funktion Schleichgang rückwärts", usw..

Die oben genannte Aufgabe wird auch mit einem Server zum Zugriff auf die Eingangs genannte Datenbasis gelöst, der nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Server, also ein Computer mit einer Verarbeitungseinheit nach Art eines Mikroprozessors, einem Speicher und mindestens einer Kommunikationsschnittstelle, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Prüf- und Arbeitsverfahren betreffen.

Es zeigen
- FIG 1: ein Automatisierungssystem und eine Datenbank mit Daten für zumindest ein Automatisierungssystem so-wie einen Server zum Zugriff auf die Datenbank,
- FIG 2: eine Darstellung zur Illustration einer möglichen Ausführungsform einer automatischen Generierung ei-ner Anweisungsliste auf Basis einer vom Benutzer gestellten Anfrage,
- FIG 3: eine schematisch vereinfachte Darstellung einer solchen automatisch generierten Anweisungsliste und
- FIG 4: eine Darstellung zur Illustration des grundsätzli-chen Ablaufs bei der automatischen Generierung ei-ner Anweisungsliste.

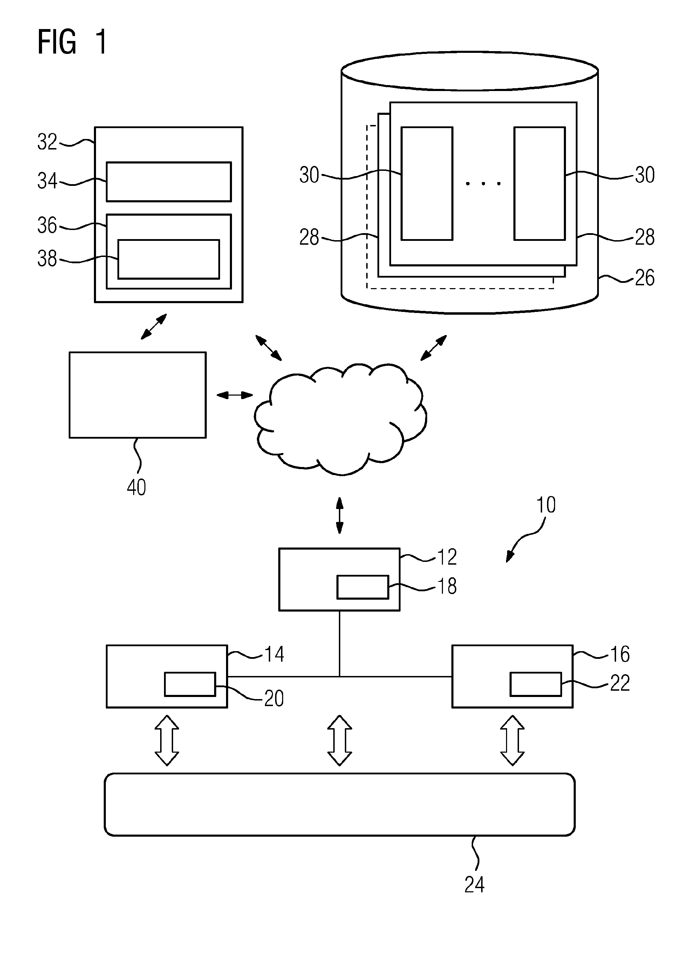

FIG 1 zeigt schematisch vereinfacht ein Automatisierungssystem 10 mit mindestens einem Automatisierungsgerät 12, hier drei kommunikativ verbundenen Automatisierungsgeräten 12, 14, 16, die unter Kontrolle eines von dem oder jedem Automatisierungsgerät 12-16 jeweils ausgeführten Steuerungsprogramms 18, 20, 22 einen nicht näher dargestellten technischen Prozess 24 steuern und/oder überwachen.

Die Gesamtheit der Hardware und der Software des Automatisierungssystems 10, also insbesondere die Automatisierungsgeräte 12-16 und die Steuerungsprogramme 18-22, wird dabei als Automatisierungslösung bezeichnet. Die Automatisierungslösung zusammen mit dem jeweiligen technischen Prozess 24 ist das Automatisierungsprojekt.

Für jedes von einem Anbieter von Automatisierungslösungen realisierte oder betreute Automatisierungsprojekt kann in einer Datenbank 26 eine Datenbasis 28 mit einem oder mehreren Datensätzen 30 gespeichert sein, der bzw. die Informationen zur jeweiligen Automatisierungslösung oder zum Automatisierungsprojekt umfasst bzw. umfassen. Über zumindest einen als Server fungierenden und im Folgenden auch als Server 32 bezeichneten Computer, der die Datenbank 26 umfasst oder auf die Datenbank 26 Zugriff hat, zum Beispiel über das als Wolke dargestellte Internet, erfolgt ein Zugriff auf die Datenbank 26 und die davon umfassten Datenbasen 28 und Datensätze 30. Als Computer weist der Server 32 in an sich bekannter Art und Weise eine Verarbeitungseinheit 34 in Form von oder nach Art eines Mikroprozessors und einen Speicher 36 auf. In den Speicher 36 ist ein Computerprogramm 38 geladen oder ladbar, mit dem der Zugriff auf die Datenbank 26 erfolgt. Ein Ergebnis einer Verarbeitung des Servers 32 kann zu einem Programmiergerät 40 oder dergleichen übermittelt werden. In der Praxis wird es häufig sogar so sein, dass ein Benutzer, der mittelbar oder unmittelbar Inhalte der Datenbank 26 abfragen will, mittels eines Programmiergeräts 40 an seinem Arbeitsort Zugriff auf den Server 32 nimmt und damit mittelbar Zugriff auf die Datenbank 26 erhält.

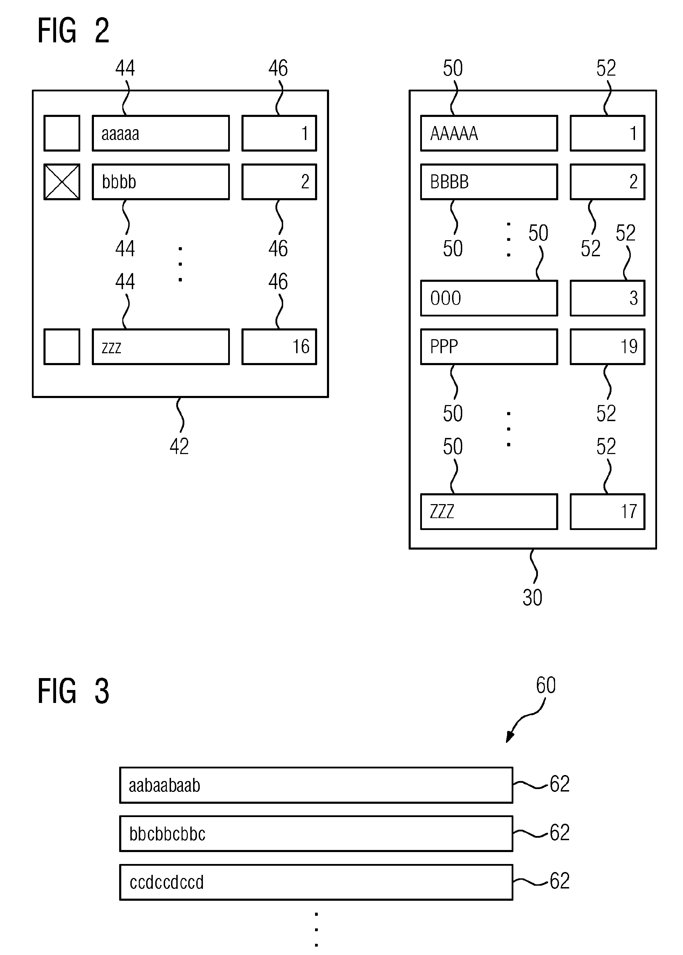

FIG 2 zeigt zur Erläuterung des Verfahrens zur Umsetzung des Ansatzes gemäß der Erfindung zunächst eine beispielhafte Ausgabe an einem Bildschirm 42 des Programmiergeräts 40 (FIG 1). Die Bildschirmausgabe umfasst eine Mehrzahl vorgegebener Anfragen 44 zum Zugriff auf die Datenbank 26 (FIG 1). In der Darstellung in FIG 2 sind die Anfragen nur symbolisch dargestellt und "aaaaa" und "bbbb" können zum Beispiel für Anfragen 44 wie "Welche Hardware-Ausstattung liegt im Automatisierungssystem vor" bzw. "Welche Software wird für das Automatisierungssystem benötigt" stehen. Mit jeder Anfrage 44 ist zumindest ein Kriterium, zum Beispiel als Kriterium eine Kennziffer 46 verknüpft. Einzelne oder mehrere Anfragen 44 sind - wie dargestellt zum Beispiel durch Ankreuzen - auswählbar. Einer Spezifikation von Anfragen 44 geht allerdings die Auswahl einer Datenbasis 28 in der Datenbank 26 voraus, nämlich die Auswahl der zu dem für den Benutzer relevanten Automatisierungsprojekt gehörigen Datenbasis 28.

Auf der rechten Seite der Darstellung in FIG 2 ist exemplarisch ein Datensatz 30 mit dort hinterlegten Daten 50 dargestellt. Jedem Datum 50 ist zumindest eine Kennung 52 zugeordnet. Bei Auswahl der Anfrage 44 mit der symbolischen Bezeichnung "bbbb" kann aufgrund der damit verknüpften Kennziffer 46 mit dem numerischen Wert "2", wenn dieser nach Art einer Bitmaske verarbeitet wird, in dem Datensatz 30 das oder jedes Datum 50 herausgesucht werden, das anhand seiner jeweiligen Kennung 52 als für diese Anfrage 44 relevant markiert wurde. Wenn sich die Anfrage 44 tatsächlich zum Beispiel auf die Software-Konfiguration des Automatisierungssystems 10 bezieht, können anhand der Kennziffer 46 und korrespondierender Kennungen 52 in dem Datensatz 30 dort alle Daten 50 ausgewählt werden, die aufgrund der jeweiligen Kennung 52 als "software-relevant" markiert sind. Andere Arten der Zuordnung sind selbstverständlich ebenfalls denkbar. So kann mit einer Anfrage 44 eine Kennziffer 46 verknüpft sein und zur Auswertung der Kennziffer 46 auf Seiten des Datensatzes 30 eine Liste mit Verknüpfungen mit oder Verweisen auf ein oder mehrere Daten 50 des Datensatzes 30 vorgesehen sein.

Jedenfalls kann der Server 32 bei einem derartigen Zugriff auf eine Datenbasis 28 in der Datenbank eine Anweisungsliste 60 (FIG 3) generieren. Dazu zeigt FIG 3 schematisch vereinfacht eine solche Anweisungsliste 60 mit einer Mehrzahl davon umfasster Einträge 62. Jeder Eintrag 62 beschreibt normalerweise eine am Automatisierungssystem 10 vorzunehmende Handlung oder eine Handlung in Bezug auf die Automatisierungslösung oder das Automatisierungsprojekt. Entsprechend werden die Begriffe Handlung und Eintrag 62 hier und im Folgenden auch synonym verwendet. Nachdem ein Eintrag 62 in der Anweisungsliste 60 aber selbst keine Handlung sein kann sondern nur zu einer solchen Handlung Anlass geben kann - ggf. auch automatisch und zum Beispiel durch den Server 32 - wird schwerpunktmäßig der Begriff Eintrag 62 verwendet, wenn es um den Eintrag 62 als Daten in der Anweisungsliste 60 geht.

Die Einträge 62 werden in der Anweisungsliste 60 vom Server 32 aufgrund einer Anfrage 44 eines Benutzers automatisch generiert. Wenn sich die jeweilige Anfrage 44 zum Beispiel auf die tatsächliche oder notwendige Software-Konfiguration des jeweiligen Automatisierungssystems 10 bezieht, können die in der Darstellung in FIG 3 nur symbolisch wiedergegebenen Einträge zum Beispiel lauten: "Entwicklungsumgebung STEP 7 V2.30 erforderlich", "Kommunikationstreiber Profibus erforderlich", usw.

Dabei ist nicht notwendig in jedem Fall eine 1:1 Entsprechung eines Datums 50 und des automatisch generierten Eintrags 62 erforderlich. In einem eine Automatisierungslösung beschreibenden Datensatz 30 kann zum Beispiel der Typ der von dem Automatisierungssystem 10 umfassten Automatisierungsgeräte 12-16 abgelegt sein. Anhand des Typs des jeweiligen Automatisierungsgeräts 12-16 ergibt sich eine Zuordnung der für das jeweilige Automatisierungsgerät 12-16 benötigten Software. Diese Zuordnung kann in der für das Automatisierungsprojekt angelegten Datenbasis oder auch - Automatisierungsprojekt-übergreifend - in der Datenbank 26 oder einer weiteren (nicht dargestellten) Datenbank, zum Beispiel einer Datenbank des Herstellers der Automatisierungsgeräte 12-16, gespeichert sein, auf die der Server 32 ebenfalls mittelbar oder unmittelbar Zugriff hat. Aus einem Datum 50, das in dem Datensatz 30 der in Zugriff genommenen Datenbasis 28 den Typ eines Automatisierungsgerätes 12-16 kodiert, wird so - durch weitere Verarbeitung und Verknüpfung durch den Server 32 - eine Information zur Generierung eines Eintrags 62 in der Anweisungsliste, die den Benutzer über die für das jeweilige Automatisierungsgerät erforderliche Software informiert. In Erweiterung dieses Ansatzes kann vorgesehen sein, dass der Server automatisch nach der als erforderlich erkannten Software sucht und diese - ggf. nach einer entsprechenden Freigabe durch den Benutzer - im Automatisierungssystem 10 installiert.

Auf dieser Basis lässt sich die Komplexität generierbarer Anweisungslisten 60 und deren Informationsinhalt/Leistungsfähigkeit nahezu beliebig erhöhen. Speziell wenn bei der automatischen Generierung der Anweisungsliste 60 durch den Server 32 auch auf Projektierungsdaten der jeweiligen Automatisierungslösung Zugriff genommen werden kann oder wenn solche Projektierungsdaten Bestandteil der jeweiligen Datenbasis 28 sind, etwa in Form eines Projektierungsdaten-Datensatzes 30, ist eine weitgehend automatische Erzeugung von Einträgen 62 in der Anweisungsliste 60 möglich, die sich konkret auf die Gegebenheiten der jeweiligen Automatisierungslösung beziehen, etwa Informationen zur tatsächlich eingesetzten Zentraleinheit umfassen und nicht nur Informationen hinsichtlich der Notwendigkeit, eine Zentraleinheit vorsehen zu müssen.

Insofern ist die dargestellte Datenbank 26 zumindest teilweise auch nur als Beispiel aufzufassen und in der Praxis kann sich - je nach Umfang der vorgesehenen Verknüpfungen - die Datenbank 26 ohne Weiteres auch als verteilte Datenbank 26 ergeben. Dann ergibt sich die Möglichkeit zum "intelligenten" Zugriff auf alle relevanten Daten, zum Beispiel auf Daten zur Projektierung, auf Herstellerdaten, zum Beispiel zur Software, Hardware, usw., auf Daten in einer Problemlösungsdatenbank, auf Daten in einer Fehlerdatenbank, oder auf Daten in Form von Softwaretools oder sonstiger Hilfsmittel.

Eine Anweisungsliste 60 wird jeweils speziell für eine Automatisierungslösung/ein Automatisierungsprojekt erstellt und zwar automatisch durch den Server 32, zum Beispiel indem dafür mittels des Programmiergeräts 40 eine entsprechende Anfrage an den Server 32 übermittelt wird. Eine solche Anweisungsliste umfasst dann zum Beispiel Einträge 62 zu jeweils vorhandenen Geräten oder Programmen oder Hinweise auf Optionspakete und/oder Anleitungen zum Prüfen von Optionspaketen. Wenn die jeweilige Datenbasis 28 einen Datensatz 30 oder mehrere Datensätze 30 umfasst, aus der sich eine Historie hinsichtlich der am Automatisierungssystem 10 vorgenommenen Änderungen ergibt, kann die automatisch generierte Anweisungsliste 60 auch Einträge 62 zu den vorgenommenen Änderungen umfassen. Außerdem kann der Server 32 bei der automatischen Generierung der Anweisungsliste 60 oder von Einträgen 62 für die Anweisungsliste 60 auf Vorlagen zurückgreifen, die für bestimmte Konfigurationen eines Automatisierungssystems 10 vorgehalten werden, wobei eine jeweilige Vorlage anhand der Daten 50 eines der Datensätze 30 der jeweiligen Datenbasis 28 auswählbar ist. Anhand zumindest einer derartigen Vorlage kann unmittelbar die Anweisungsliste 60 oder können unmittelbar Einträge 62 für die Anweisungsliste 60 entstehen. Es kann auch sein, dass anhand der Vorlage oder Vorlagen und sonstiger Randbedingungen (Land, Branche) einzelne Positionen der Vorlagen entfallen und sich daraus keine Einträge 62 für die Anweisungsliste 60 ergeben oder dass weitere Einträge 62 hinzukommen.

Grundsätzlich ist vorgesehen, dass die automatisch generierte Anweisungsliste 60 oder ggf. auch mehrere automatisch generierte Anweisungslisten 60 in einer gemeinsamen Systemliste geführt und verbunden werden. So ist zum Beispiel eine Prüfung, ob die aktuellen Softwarepakete verfügbar oder installiert sind, anhand einer Herstellerdatenbank möglich. Weitere Informationen können sich aus einer in der Fachterminologie als "Customer Support Datenbank" bezeichneten Datenbank und/oder einer Problemlösungsdatenbank des Herstellers des jeweiligen Geräts oder des Anbieters der jeweiligen Software ergeben. In einem konkreten Anwendungsszenario kann, wenn eine bestimmte Software-/Firmwareversion in dem Automatisierungssystem installiert ist, geprüft werden, ob der von dem Kunden oder dem Automatisierungssystem selbst gemeldete Fehler mit bekannten Fehler in der jeweiligen Version in Verbindung stehen kann und in welcher Software-/Firmwareversion dieser Fehler behoben ist. Wenn solche Informationen automatisch abgeleitet wurden, kann ausgehend davon die Anweisungsliste 60 um Einträge 62 ergänzt werden, wie diese neue Version verwendet werden kann und/oder welche zusätzlichen Maßnahmen evtl. für deren Verwendung oder zur Hochrüstung (z.B. Speicherergänzung) durchgeführt werden müssen.

Die Einträge 62 in der oder jeder automatisch generierten Anweisungsliste 60 führen den jeweiligen Benutzer automatisch zu allen benötigten Informationen oder Lösungsstellen. Beispielhaft sei an dieser Stelle genannt, dass automatisch generierte Einträge 62 im Hinblick auf eine jeweilige tatsächliche Hardwarekonfiguration des Automatisierungssystems 10 für das oder jedes Automatisierungsgerät 12-16 Verweise, zum Beispiel Verweise nach Art oder in Form von Hyperlinks, zu Betriebsanleitungen, Softwareaktualisierungen, Softwaretools, usw. umfassen können. Mit Zugriff auf Projektierungsdaten und dergleichen ist auch eine dynamische Ermittlung von für den Benutzer relevanten Information oder Stellen an denen in dem Automatisierungssystem 10 Überprüfungen oder Veränderungen vorgenommen werden müssen, möglich. Solche Stellen können meist nicht im Vorfeld ermittelt werden und entsprechend erfolgt eine automatische Ermittlung durch die Möglichkeit des Servers 40, automatisch in Form von Datensätzen 30 oder Daten 50 in Datensätzen bereit gestelltes "Wissen" zu kombinieren und/oder in sonst geeigneter Weise auszuwerten. Um den Benutzer zu ggf. relevanten Zusatzinformationen oder Problemlösungshinweisen zu führen, wird eine Ausgangsstelle, von der sich die Zusatzinformation bzw. der Problemlösungshinweis erreichen lässt, in die Anweisungsliste 60 eingefügt. Solche Verknüpfungen oder Verweise können auch vom Benutzer ergänzt oder verändert werden, etwa wenn der Benutzer in der Anweisungsliste 60 nach einer dort in Bezug genommenen Stelle sucht und zum leichteren Auffinden einen weiteren, für den Benutzer wie ein Lesezeichen fungierenden Eintrag 62 zu der Anweisungsliste 60 hinzufügt. Schließlich kann auch eine Folge von Handlungen hinterlegt werden, zum Beispiel durch eine Funktionalität nach Art eines Skriptes. Auf eine solche Folge, die im Weiteren und ohne Verzicht auf eine evtl. weitergehende Allgemeingültigkeit als Skript bezeichnet wird, kann genauso wie auf statisch Informationen wie z.B. ein Handbuch verwiesen werden und ein in Bezug genommenes Skript kann zum Beispiel eine Animation oder ein sonstiges Video abspielen, mit dem bestimmte notwendige Bedienhandlungen illustriert werden.

Allgemein kommen als Ursprung der Einträge 62 für eine automatisch generierte Anweisungsliste 60 zumindest die Folgenden Quellen in Betracht, wobei für deren automatische Auswertung durch den Server 32 eine Bereitstellung in einem geeigneten Format notwendig ist, also zum Beispiel eine Bereitstellung in Form eines Datensatzes 30 oder von Datensätzen 30, wie grundsätzlich in FIG 2 gezeigt: Statische Herstellerdaten, Daten des Benutzers aufgrund vorliegender Erfahrungen, Daten des Benutzers aufgrund von weiteren Erkenntnissen, die sich im Zusammenhang mit dem jeweils aktuellen Projekt ergeben haben, Daten aus den verwendeten Vorlagen, etc. Des Weiteren können sich die Einträge 62 auch als systemgenerierte Einträge 62 anhand der ausgewerteten Randbedingungen (Tool, Projekt, Anlage, Hersteller, usw.), als systemgenerierte Einträge 62 anhand von Informationen aus Fehler- und Problemlösungsdatenbanken, als systemgenerierte Einträge 62 anhand der Dynamik der jeweiligen Inbetriebnahme sowie als systemgenerierte Einträge 62 anhand einer geeigneten Kombination einzelner oder mehrerer der vorgenannten Punkte ergeben.

In einer Ausführungsform bei der Nutzung des Ansatzes gemäß der Erfindung ist eine Prüfung der Abarbeitung der Einträge 62 der Anweisungsliste 60 vorgesehen. Die Einträge 62 können sowohl vom Benutzer wie auch vom System gleichsam "abgehakt" werden. Wenn die Einträge 62 vom Benutzer abgehakt werden, ist gemäß einer besonderen Ausführungsform vorgesehen, dass das System, also zum Beispiel eine Zusatzfunktionalität einer bisher bereits verwendeten Entwicklungsumgebung, die auch den Zugriff auf den Server 32 und den Erhalt der Anweisungsliste 60 vom Server 32 erlaubt, eine automatische Statusprüfung durchführt und einen Eintrag 62 nur dann als abgehakt akzeptiert, wenn dieser auch wirklich erledigt ist. Bei der Abarbeitung der Einträge 62 führt das System den Benutzer an die jeweils relevanten Stellen, zum Beispiel zu einer Textstelle in einem Handbuch, zu einer Zeile in einem Computerprogramm, zu einem Speicherort für ein Softwaretool, usw. Der Benutzer kann dabei die Einträge 62 der Reihe nach aufrufen. Der Benutzer kann auch hinsichtlich des Aufrufs der Einträge 62 und/oder davon ausgehender Verknüpfungen oder Verweise unterstützt werden, indem das System ein diesbezügliches Makro abspielt. Alternativ zu einem solchen Makro kommt auch ein Skript in Betracht, das allerdings eine zusätzliche Flexibilität ermöglich, indem die Verzweigung zu einzelnen Einträgen 62 oder Verweisen in dem Skript zum Beispiel von Bedingungen abhängig gemacht wird, so dass etwa ein bestimmter Treiber nur dann installiert werden kann, wenn eine für den Treiber notwendige Basissoftware in der erforderlichen Version vorliegt.

Bei einer systemseitigen Prüfung der Abarbeitung der Einträge 62 der Anweisungsliste 60 oder in Ergänzung zu einer manuellen Markierung bearbeiteter Einträge 62 kann vorgesehen sein, dass das System die Überprüfung periodisch oder nach einer vorgegebenen oder vorgebbaren Wartezeit erneut durchführt. Bei einer solchen Wiederholung können neue Abhängigkeiten, die sich durch die Arbeit des Benutzers ergeben haben, oder geänderte Randbedingungen, die Auswirkungen auf die Einträge 62 oder deren Status haben, berücksichtigt werden.

Insoweit sind zumindest die folgenden Varianten denkbar: Das System prüft einzelne oder alle Einträge 62 einmalig und "hakt diese ab", wenn die dafür notwendigen Bedingungen erfüllt sind; das System prüft ständig; das System schlägt nur vor und der Benutzer prüft und hakt ab. Ein Beispiel für eine dabei erfolgende Konsistenzprüfung ist eine Situation, bei der eine Ankopplung einer Last, z.B. an einen Antriebsmotor, vorgesehen ist und der Benutzer nach Ankoppeln der Last den Eintrag 62 entsprechend markiert. Wenn das System keinen Unterschied zwischen dem bisherigen Betrieb des Antriebsmotors ohne Last und den aktuellen Betrieb des Motors mit Last erkennen kann, z.B. an einer kurzzeitigen Drehzahländerung, ist eine Situation gegeben, bei der das System die Markierung des Eintrags 62 als abgearbeitet anzweifeln kann, so dass der Benutzer einen entsprechenden Hinweis erhält.

Im Weiteren kann zusätzlich oder alternativ auch eine Sinnhaftigkeit einzelner oder aller Einträge 62 der Anweisungsliste automatisch überprüft werden. Eine Situation eines evtl. nicht sinnvollen Eintrags 62 ist ein Verweis zu Daten für zum Beispiel eine Kommunikationsbaugruppe, die nach der Projektierung des Automatisierungssystems 10 von diesem gar nicht umfasst sein soll. Auf ähnlicher Basis kann eine Plausibilitätsprüfung vorgesehen sein, die sicherstellt, dass nur Einträge 62 in der Anweisungsliste 60 beibehalten werden, die im Zusammenhang mit der jeweiligen Hardware des Automatisierungssystems 10 Sinn machen. Zum Beispiel können sämtliche Einträge 62 zu einem bestimmten Gerät aus einer automatisch generierten Anweisungsliste 60 entfernt werden, wenn sich die Konfiguration des Automatisierungssystems 10 ändert und das ursprüngliche Gerät, auf das sich die Einträge beziehen, in der neuen Konfiguration von dem Automatisierungssystem 10 nicht mehr umfasst ist.

Ein generelles Kennzeichen der automatisch generierten Anweisungsliste 60 ist die Möglichkeit von deren Export oder sonstiger Weitergabe. Die jeweils automatisch generierte Anweisungsliste 60 ist damit nicht nur Bestandteil eines konkreten Projekts sondern kann auch - ganz oder teilweise - in anderen Projekten und/oder von anderen Benutzer verwendet werden.

Eine solche Möglichkeit der Weitergabe automatisch generierter und im Laufe des Projekts durch den jeweiligen Benutzer ggf. geänderter oder angepasster Anweisungslisten 60 eröffnet auch die Möglichkeit, eine Mehrzahl derartiger Anweisungslisten zu analysieren und auszuwerten, um bestmögliche Lösungswege zu finden und genau diese anderen Benutzern, zum Beispiel über das Internet, zur Verfügung zu stellen. Ein Detail dieses Aspekts ist, dass eine Mehrzahl von Lösungswegen unterschiedlicher Benutzer ausgewertet werden und dass aus diesen Lösungswegen neue Einträge 62 zu einem bestimmten Problem in der Anweisungsliste 60 generiert werden, die dem nächsten Benutzer in einer ähnlichen Situation helfen, die beste Lösung zu finden.

Ein Zusatznutzen des hier beschriebenen Ansatzes ergibt sich, wenn eine automatisch generierte Anweisungsliste 60, die zum Beispiel im Zusammenhang mit einer Inbetriebnahme entstanden ist, oder mehrere derartige Listen, auf dem jeweiligen Automatisierungsgerät 12-16 oder in sonst geeigneter Weise im Automatisierungssystem 10 hinterlegt werden, so dass die darin zusammengefassten Informationen auch später noch, zum Beispiel für Wartungsfälle oder dergleichen, zur Verfügung stehen. Des Weiteren können auf diese Weise Anweisungen mit Schritten zur Wiederherstellung eines vorherigen Zustands/ursprünglichen Funktionsumfangs gesichert und insbesondere auf dem jeweiligen Automatisierungsgerät 12-16 oder in sonst geeigneter Weise im Automatisierungssystem 10 vorgehalten werden. Ein nochmals weiterer Zusatznutzen des hier vorgestellten Ansatzes besteht darin, dass mit einer automatisch generierten Anweisungsliste 60 auch Fachleute, wie sie zum Beispiel für eine Hotline oder im Customer Support tätig sind, einen Techniker vor Ort mit Informationen versorgen oder diesen bei bestimmten Arbeitsschritten anleiten können. Solche Fachleute können sich für die jeweilige Automatisierungslösung/das jeweilige Automatisierungsprojekt eine Anweisungsliste 60 erzeugen lassen und damit einem Techniker vor Ort gezielt unterstützen, wenn es darum geht, etwaige Fehler zu finden und zu beheben oder wenn es darum geht, im Zusammenhang mit einer Inbetriebnahme die richtigen Schritte in der richtigen Reihenfolge auszuführen.

Einzelne im Vordergrund stehende Aspekte der hier vorgelegten Beschreibung lassen sich damit kurz wie folgt zusammenfassen: Anhand von hinterlegten Daten 50 kann automatisch eine Anweisungsliste 60 mit Einträgen 62 für einen Benutzer generiert werden. Die Anweisungsliste 60 wird entweder bei deren Generierung oder bei der Abarbeitung mit dem jeweiligen Automatisierungssystem 10/der jeweiligen Automatisierungslösung und/oder dem jeweiligen Automatisierungsprojekt verbunden, indem system-, lösungs- oder projektspezifische Daten zur Konkretisierung einzelner Einträge 62 verwendet werden.

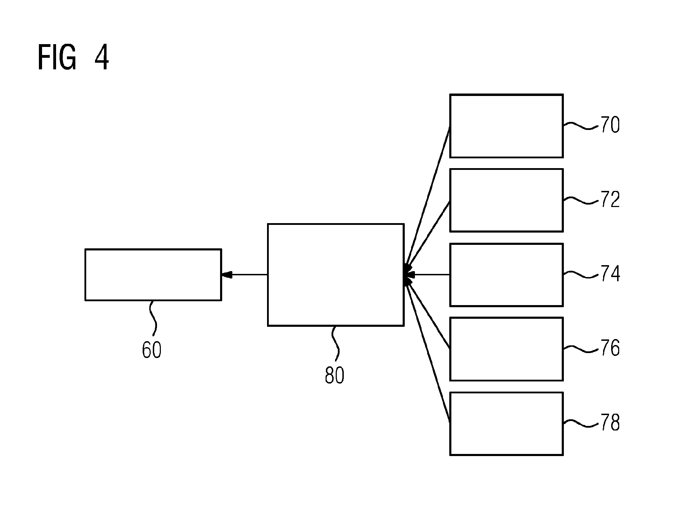

FIG 4 zeigt dafür schematisch vereinfacht nochmals den grundsätzlichen Ablauf bei der automatischen Generierung einer Anweisungsliste durch den Server 32. Aus unterschiedlichen Datensammlungen und daraus ggf. aufbereiteten Datensätzen 30, nämlich einer ersten Datensammlung 70 des Benutzer, einer zweiten, projektspezifischen Datensammlung 72 , einer dritten Datensammlung 74 im Hinblick auf Tools, Soft- und Hardware, einer vierten Datensammlung 76 mit Fehlerdaten und einer fünften Datensammlung 78 mit Problemlösungsdaten generiert eine in Software implementierte und insbesondere durch den Server 32 oder einen sonst geeigneten Computer ausgeführt Kombinationsfunktionalität (Kombinationsengine) 80 die jeweilige automatisch generierte Anweisungsliste 60 mit zumindest einem davon umfassten Eintrag 62, üblicherweise einer Mehrzahl von Einträgen 62.

## Patentansprüche

1. Verfahren zur automatischen Generierung einer Anweisungsliste (60) für Handlungen an einem Automatisierungssystem (10) in einem Automatisierungsprojekt durch einen Server (32),
- wobei in einer vom Server (32) umfassten oder für den Server (32) erreichbaren Datenbank (26) für ein oder mehrere Automatisierungsprojekte jeweils eine Datenbasis (28) mit jeweils mindestens einem Datensatz (30) hinterlegt wird oder ist,
- wobei sich ein Benutzer zum Generieren der Anweisungsliste (60) mittels des Servers (32) bei der Datenbank (26) anmeldet und ein Automatisierungsprojekt und damit mittelbar oder unmittelbar die zugehörige Datenbasis (28) auswählt,
- wobei der Server (32) in Bezug auf die Datenbasis (28) automatisch eine Anweisungsliste (60) anhand mindestens eines Datensatzes (30) der Datenbasis (28) für den Benutzer generiert.

2. Verfahren nach Anspruch 1, wobei der Benutzer nach der Auswahl einer Datenbasis (28) mittelbar oder unmittelbar mindestens einen von der Datenbasis (28) umfassten Datensatz (30) auswählt und wobei der Server (32) automatisch eine Anweisungsliste (60) anhand mindestens eines Datensatzes (30) der Datenbasis (28) für den Benutzer generiert.

3. Verfahren nach Anspruch 2, wobei der Server (32) eine begrenzte Anzahl von Anfragen verarbeiten kann, wobei für jede Anfrage ein Kriterium hinterlegt ist und wobei jedes Kriterium mit mindestens einem Datensatz (30) verknüpft ist.

4. Verfahren nach einem der vorangehenden Ansprüche,
- wobei die Anweisungsliste (60) in eine Entwicklungsumgebung zur Verwendung mit dem Automatisierungssystem (10) integriert ist,
- wobei in der Anweisungsliste (60) eine oder mehrere Handlungen gespeichert werden, die im Zusammenhang mit dem Automatisierungssystem (10) vorzunehmen sind
- wobei in der Anweisungsliste (60) automatisch einzelne Handlungen in detaillierte Handlungen aufgespalten und automatisch mit projektbezogenen Daten versehen werden.

5. Verfahren nach Anspruch 4, wobei die Anweisungsliste (60) in eine Entwicklungsumgebung zur Verwendung mit dem Automatisierungssystem (10) integriert ist.

6. Verfahren nach Anspruch 4 oder 5, wobei eine in der Anweisungsliste (60) gespeicherte Handlung zum Bereitstellen oder Vorbereiten von für das Automatisierungsprojekt und/oder das Automatisierungssystem (10) benötigen Softwareprodukten in detaillierte Handlungen aufgespalten und automatisch mit projektbezogenen Daten versehen wird, indem anhand des Automatisierungsprojekts die jeweils benötigten Softwareprodukte im einzelnen ermittelt und für jedes benötigte Softwareprodukt eine Handlung in die Anweisungsliste (60) eingetragen wird.

7. Computerprogramm (38) mit Programmcode-Mitteln, um alle Schritte von jedem beliebigen der Ansprüche 1 bis 6 durchzuführen, wenn das Programm auf einem Automatisierungsgerät ausgeführt wird.

8. Computerprogrammprodukt mit Programmcode-Mitteln, die auf einem computerlesbaren Datenträger gespeichert sind, um das Verfahren nach jedem beliebigen der Ansprüche 1 bis 6 durchzuführen, wenn das Programmprodukt auf einem Automatisierungsgerät ausgeführt wird.

9. Automatisierungsgerät mit einer Verarbeitungseinheit (34) und einem Speicher (36), in den ein Computerprogramm (38) nach Anspruch 7 geladen ist, das im Betrieb des Gerätes durch die Verarbeitungseinheit (34) ausgeführt wird.
